# EUROPÄISCHE PATENTANMELDUNG

(11) **EP 3 437 480 A1**
(43) Veröffentlichungstag der Anmeldung: **06.02.2019**
(21) Anmeldenummer: 17184647.0
(22) Anmeldetag: 03.08.2017
(51) Int. Cl.: A21C 15/04, A23G 3/20

(54) **BEARBEITUNGSSTATION ZUR BILDUNG VON WAFFELFORMKÖRPERN MIT EINER SCHNEIDWALZE**

(71) Anmelder: Haas Food Equipment GmbH, 1210 Wien (AT)
(72) Erfinder: Bibaric, Markus, 3400 Kierling (AT)
(74) Vertreter: Puchberger & Partner Patentanwälte

(57) **Zusammenfassung**

Bearbeitungsstation und Anordnung zur Bildung von Waffelformkörpern (1) durch Abtrennen von Verbindungsstegen (2) von einem aus den Waffelformkörpern (1) und den Verbindungsstegen (2) zusammengesetzten Backzusammenhang (3), umfassend: eine Trennvorrichtung (4) zum Abtrennen der Verbindungsstege (2) des Backzusammenhangs (3), mindestens eine Haltevorrichtung (5) zur Halterung des Backzusammenhangs (3) und der Waffelformkörper (1) des Backzusammenhangs (3) in einem Haltebereich (6) der Haltevorrichtung (5), und eine Fördervorrichtung (7), die zur kontinuierlichen Förderung der Haltevorrichtung (5) durch die Trennvorrichtung (4) entlang einer Förderrichtung (12) eingerichtet ist, wobei die Trennvorrichtung (4) einen insbesondere zylindrisch ausgebildeten Grundkörper (8) aufweist, der um eine oder seine Rotationsachse (9) drehbar angetrieben ist und wobei der Grundkörper (8) an seiner Außenseite oder an seiner Mantelfläche (10) mit mindestens einem Schneidwerkzeug (11) zum Abtrennen mindestens eines Verbindungsstegs (2) versehen ist.

## Beschreibung

Die Erfindung betrifft eine Bearbeitungsstation gemäß den Merkmalen des Oberbegriffs des unabhängigen Patentanspruchs.

Insbesondere betrifft die Erfindung eine Bearbeitungsstation, in der als Hohlwaffenschalen ausgebildete Waffelformkörper von einem Backzusammenhang abgetrennt werden, um aus diesen Waffelformkörpern essbare Produkte zu bilden. Zur Bildung der Waffelformkörper wird in einem ersten Schritt in einer Backmaschine ein sogenannter Backzusammenhang gebacken. Dieser Backzusammenhang entspricht einem gebackenen Waffelblatt bzw. einem gebackenen Hohlwaffelblatt, das im Wesentlichen durch die Waffelformkörper und durch Verbindungsstege gebildet oder zusammengesetzt ist. Die Verbindungsstege verbinden die einzelnen Waffelformkörper des Backzusammenhangs miteinander. In der Regel ist der Backzusammenhang ein im Wesentlichen plattenförmiger Waffelkörper, bei dem die entlang einer Ebene angeordneten Verbindungsstege mehrere Waffelformkörper miteinander verbinden. Die Waffelformkörper stehen in der Regel von den Verbindungsstegen ab. Insbesondere weicht der Verlauf der Waffelformkörper vom Verlauf der Verbindungsstege ab. Durch Abtrennen der Verbindungsstege von den Waffelformkörpern werden einzelne Waffelformkörper gebildet. Diese Waffelformkörper können in weiterer Folge die Endprodukte sein. Gegebenenfalls werden die Waffelformkörper mit einer essbaren Creme gefüllt und/oder beschichtet, um Endprodukte zu bilden.

Gemäß Stand der Technik sind Trennvorrichtungen zur Vereinzelung von Waffelformkörpern bekannt, bei denen die Verbindungsstege durch eine Sägevorrichtung abgesägt oder abgefräst werden. Die Trennung erfolgt dabei entlang jener Ebene, in der auch die Verbindungsstege verlaufen. Derartige Vorrichtungen können jedoch nur für Waffelformkörper eingesetzt werden, die einseitig von den Verbindungsstegen abstehen. Darüber hinaus dürfen diese Backprodukte auch nur von jener Seite der Verbindungsstege abstehen, die dem Trennwerkzeug abgeneigt ist. Anderenfalls würde das Trennwerkzeug die Waffelformkörper zerstören.

Aufgabe der Erfindung ist es nun, die Nachteile des Standes der Technik zu überwinden und insbesondere eine Bearbeitungsstation zur Bildung von Waffelformkörpern durch Abtrennen der Verbindungsstege des Backzusammenhangs bereitzustellen, in der neuartige Formen von Waffelformkörpern bearbeitet oder vereinzelt werden können. Insbesondere betrifft dies Waffelformkörper, bei denen die Backprodukte von den Verbindungsstegen abstehen. Bevorzugt können durch die erfindungsgemäße Bearbeitungsstation Waffelformkörper, insbesondere Backprodukte, vereinzelt werden, die beidseitig von den Verbindungsstegen abstehen und/oder die Richtung Schneidwerkzeug abstehen.

Die erfindungsgemäße Aufgabe wird insbesondere durch die Merkmale des unabhängigen Patentanspruchs gelöst.

Insbesondere betrifft die Erfindung eine Bearbeitungsstation zur Bildung von Waffelformkörpern durch Abtrennen von Verbindungsstegen von einem aus den Waffelformkörpern und den Verbindungsstegen zusammengesetzten Backzusammenhang, umfassend:
- eine Trennvorrichtung zum Abtrennen der Verbindungsstege des Backzusammenhangs,
- mindestens eine Haltevorrichtung zur Halterung des Backzusammenhangs und der Waffelformkörper des Backzusammenhangs in einem Haltebereich der Haltevorrichtung,
- und eine Fördervorrichtung, die zur kontinuierlichen Förderung der Haltevorrichtung durch die Trennvorrichtung entlang einer Förderrichtung eingerichtet ist,
- wobei die Trennvorrichtung einen insbesondere zylindrisch ausgebildeten Grundkörper aufweist, der um eine oder seine Rotationsachse drehbar angetrieben ist,
- wobei der Grundkörper an seiner Außenseite oder an seiner Mantelfläche mit mindestens einem Schneidwerkzeug zum Abtrennen mindestens eines Verbindungsstegs versehen ist.

Bevorzugt ist vorgesehen, dass der drehbar angetriebene Grundkörper mit dem mindestens einen Schneidwerkzeug als Schneidwalze zur Trennung der Verbindungsstege von den Waffelformkörpern ausgebildet ist oder wirkt.

Bevorzugt ist vorgesehen, dass die Bewegung der Fördervorrichtung mit der Rotation des Grundkörpers und des Schneidwerkzeugs synchronisiert ist.

Gegebenenfalls ist vorgesehen, dass die Haltevorrichtung als Gegenhalter für die Schneidwalze ausgebildet ist oder wirkt und insbesondere dass das Schneidwerkzeug zum Abtrennen der Verbindungsstege an der Haltevorrichtung abrollt.

Gegebenenfalls ist vorgesehen, dass die Haltevorrichtung eine oder mehrere der Form des Backzusammenhangs angepasste Freistellungen oder Vertiefungen zur Aufnahme der vom Backzusammenhang Richtung Haltevorrichtung abstehenden Backprodukte aufweist.

Gegebenenfalls ist vorgesehen, dass die Haltevorrichtung im Bereich der Freistellungen oder Vertiefungen eine oder mehrere der Form des Backzusammenhangs angepasste Halteflächen zur Anlage der Waffelformkörper oder zur Anlage der Verbindungsstege des Backzusammenhangs umfasst.

Gegebenenfalls ist vorgesehen, dass mit einer Unterdruckquelle in Kontakt stehende Saugöffnungen zur Halterung der Waffelformkörper des Backzusammenhangs an der Haltevorrichtung und zur Halterung der Backprodukte in den Freistellungen oder Vertiefungen vorgesehen sind.

Gegebenenfalls ist vorgesehen, dass die Haltevorrichtung als Saugplatte ausgebildet ist.

Gegebenenfalls ist vorgesehen, dass das mindestens eine Schneidwerkzeug den Grundkörper in radialer Richtung überragt.

Gegebenenfalls ist vorgesehen, dass der Grundkörper und/oder das Schneidwerkzeug mindestens eine, bevorzugt mehrere, der Form des Backzusammenhangs angepasste Freistellungen oder Vertiefungen zur Aufnahme der vom Backzusammenhang Richtung Grundkörper abstehenden Backprodukte aufweist.
Gegebenenfalls ist vorgesehen, dass an dem Grundkörper mehrere Schneidwerkzeuge vorgesehen sind.

Gegebenenfalls ist vorgesehen, dass der Grundkörper im Wesentlichen entlang der gesamten Breite des Haltebereichs mit einem Schneidwerkzeug oder mit mehreren Schneidwerkzeugen versehen ist.

Gegebenenfalls ist vorgesehen, dass die Schneidwerkzeuge und/oder deren Schneiden im Wesentlichen entlang einer zylindrischen Fläche verlaufen oder abschließen, wobei die zylindrische Fläche koaxial zur Rotationsachse des Grundkörpers angeordnet ist.

Gegebenenfalls ist vorgesehen, dass die Schneidwerkzeuge und/oder deren Schneiden im Wesentlichen entlang einer zylindrischen Fläche verlaufen oder abschließen, wobei die zylindrische Fläche koaxial zur Rotationsachse des Grundkörpers angeordnet ist.

Gegebenenfalls ist vorgesehen, dass die Haltevorrichtung im Wesentlichen tangential zu dieser zylindrischen Fläche verläuft.

Gegebenenfalls ist vorgesehen, dass die Schneidwerkzeuge mit der Bewegung der Haltevorrichtung derart synchronisiert sind, dass zwischen den Schneidwerkzeugen und den Haltevorrichtungen kein Schlupf auftritt und insbesondere, dass die Umfangsgeschwindigkeit der Schneiden der Bewegungsgeschwindigkeit des Backzusammenhangs bzw. der Haltevorrichtungen entspricht.

Gegebenenfalls ist vorgesehen, dass mehrere Schneidwerkzeuge entlang ihrer zylindrischen Bewegungsfläche am Grundkörper hintereinander und/oder versetzt hintereinander angeordnet sind.

Gegebenenfalls ist vorgesehen, dass mehrere Haltevorrichtungen vorgesehen sind,
- dass die Fördervorrichtung als Endlosförderer ausgebildet ist,
- dass die Haltevorrichtungen aneinandergereiht entlang der Fördervorrichtung angeordnet sind,
- und dass die Haltevorrichtungen von der Fördervorrichtung kontinuierlich durch die Trennvorrichtung bewegt werden oder bewegbar sind.

Gegebenenfalls ist vorgesehen, dass die Haltevorrichtungen von der Fördervorrichtung nacheinander, insbesondere von einem Aufnahmebereich zur Aufnahme der Backzusammenhänge, durch die Trennvorrichtung und zu einem Entnahmebereich zur Entnahme der Waffelformkörper bewegt werden oder bewegbar sind.

Gegebenenfalls ist vorgesehen, dass die Rotationsachse quer zur Förderrichtung und insbesondere normal zur Förderrichtung angeordnet ist.

Insbesondere betrifft die Erfindung eine Anordnung eines aus Waffelformkörpern und Verbindungsstegen zusammengesetzten Backzusammenhangs und einer Bearbeitungsstation, wobei die Waffelformkörper beidseitig von den Verbindungsstegen abstehen und/oder wobei die Waffelformkörper von den Verbindungsstegen Richtung Schneidwerkzeug abstehen.

Die erfindungsgemäße Bearbeitungsstation ist bevorzugt dazu geeignet und/oder eingerichtet, auf einem kontinuierlich arbeitenden Endlosförderer geförderte Waffelblätter zu bearbeiten. Die Waffelblätter umfassen bevorzugt als Hohlwaffelschalen ausgebildete Waffelformkörper, die durch Verbindungsstege miteinander verbunden sind. Diese Verbindungsstege sollen abgetrennt werden.

Bevorzugt ist vorgesehen, dass an dem Grundkörper mehrere Schneidwerkzeuge vorgesehen sind. Die Schneiden der Schneidwerkzeuge verlaufen bevorzugt entlang einer geschlossenen Kontur. Diese Kontur ist bevorzugt der Form der zu vereinzelnden Waffelformkörper angepasst. Insbesondere ist die endgültige Form der Waffelformkörper durch die Kontur der Schneide des jeweiligen Schneidwerkzeugs bestimmt.

Die Waffelformkörper und/oder die Verbindungsstege werden bei der Bearbeitung bevorzugt an einer Haltevorrichtung gehalten. Die Haltevorrichtung wird bevorzugt kontinuierlich entlang einer Förderrichtung gefördert. Die Bewegung der Haltevorrichtung und die Bewegung der Schneidwerkzeuge sind bevorzugt synchronisiert, sodass die Schneidwerkzeuge derart gegenüber der Haltevorrichtung und der an der Haltevorrichtung angeordneten Waffelformkörper positioniert werden, dass die gewünschte Form der Waffelformkörper ausgeschnitten bzw. ausgestanzt wird.

Bevorzugt ist die Schneidbewegung eine rollende Bewegung, die im Gegensatz zu einer herkömmlichen Stanze als rollende Schnittbewegung ausgeführt ist. Dadurch können die Schneidkräfte verringert werden. Die Drehung bzw. die rollende Bewegung erfolgt bevorzugt kontinuierlich.

Als Gegenhalter für die Schneidwalze bzw. die Stanzwalze dient gegebenenfalls die Haltevorrichtung. Die Haltevorrichtung ist dazu bevorzugt derart ausgestaltet, dass die Verbindungsstege an einem Element der Haltevorrichtung anliegen. Insbesondere liegen die Verbindungsstege in jenen Bereichen an der Haltevorrichtung an, die als Gegenhalter für die Schneidwerkzeuge dienen, und an denen die Schneidwerkzeuge anliegen bzw. abrollen. Dadurch kann ein effizientes Schneiden und eine effiziente Vereinzelung der Waffelformkörper bewirkt werden.

Die Synchronisierung der Schneidwerkzeuge gegenüber der Haltevorrichtung kann über herkömmliche Mittel erfolgen. Beispielsweise können der Grundkörper und die Fördervorrichtung jeweils einen Antrieb umfassen, wobei die beiden Antriebe miteinander synchronisiert sind. Alternativ kann ein einziger Antrieb vorgesehen sein, durch den die Fördervorrichtung und der Grundkörper angetrieben werden. In diesem Fall kann ein Getriebe vorgesehen sein, durch das eine synchronisierte Drehung des Grundkörpers gegenüber der Bewegung der Haltevorrichtung bewirkt wird.

Gegebenenfalls kann auch vorgesehen sein, dass der Grundkörper durch das Abrollen der Schneidwerkzeuge an der Haltevorrichtung angetrieben ist. Insbesondere können an der Haltevorrichtung Fortsätze oder Nuten vorgesehen sein, in die starr mit dem Grundkörper verbundene Elemente eingreifen, sodass durch die Bewegung der Haltevorrichtung auch der Grundkörper angetrieben wird. Diese Elemente können beispielsweise die Schneidwerkzeuge sein, die an einer Gegenschneide oder Gegenfläche abrollen. Gegebenenfalls können diese Elemente zur Synchronisierung jedoch auch seitlich, neben den Schneidwerkzeugen, angeordnete Fortsätze sein, die zwischen die Haltevorrichtungen der Fördervorrichtung ragen, um eine Drehung des Grundkörpers zu bewirken.

In allen Ausführungsformen ist bevorzugt vorgesehen, dass die Synchronisierung der Schneidwerkzeuge gegenüber der Haltevorrichtung und/oder dem zu bearbeitenden Backzusammenhang derart ausgeführt ist, dass die Schneidwerkzeuge bei der Bearbeitung die selbe Geschwindigkeit aufweisen, wie der Backzusammenhang bzw. wie die Haltevorrichtung. Insbesondere ist bevorzugt vorgesehen, dass entlang der Bewegungsrichtung der zu bearbeitenden Waffelblätter kein Schlupf bzw. keine Relativbewegung der Schneidwerkzeuge gegenüber dem Backzusammenhang gegeben ist. Quer zur Bewegungsrichtung ist durch die bevorzugt vorgesehene zylindrische Ausbildung bzw. Anordnung der Schneidwerkzeuge jedoch durchaus eine Relativbewegung gegeben. Die Schneidwerkzeuge, insbesondere die Schneiden der Schneidwerkzeuge, rollen an der Haltevorrichtung und/oder an dem Waffelformkörper ab, um die Verbindungsstege von den Waffelformkörpern abzutrennen. Diese Abtrennung geschieht insbesondere durch kontinuierliches Abrollen der Schneidwerkzeuge.

In weiterer Folge wird die Erfindung nun an exemplarischen Ausführungsformen weiter beschrieben.
Fig. 1 zeigt eine Schrägansicht maßgeblicher Komponenten einer erfindungsgemäßen Bearbeitungsstation.
Fig. 2 zeigt eine Ansicht einer schematischen Darstellung maßgeblichen Komponenten einer erfindungsgemäßen Bearbeitungsstation, wobei die Blickrichtung im Wesentlichen der Förderrichtung und der Längserstreckungsrichtung der Verbindungsstege folgt.
Fig. 3 zeigt eine Seitenansicht eines Grundkörpers mit Schneidwerkzeugen in einer schematischen, stark vereinfachten, Darstellung.
Fig. 4 zeigt Details einer erfindungsgemäßen Bearbeitungsstation.

Wenn nicht anders angegeben, so entsprechen die in den Figuren angeführten Bezugszeichen folgenden Komponenten: Waffelformkörper 1, Verbindungssteg 2, Backzusammenhang 3, Trennvorrichtung 4, Haltevorrichtung 5, Haltebereich 6, Fördervorrichtung 7, Grundkörper 8, Rotationsachse 9, Mantelfläche 10, Schneidwerkzeug 11, Förderrichtung 12, Haltefläche 13, Unterdruckquelle 14, Saugöffnung 15, Aufnahmebereich 16, Breite (des Haltebereichs) 17, Schneiden 18, Freistellung 19, Entnahmebereich 20.

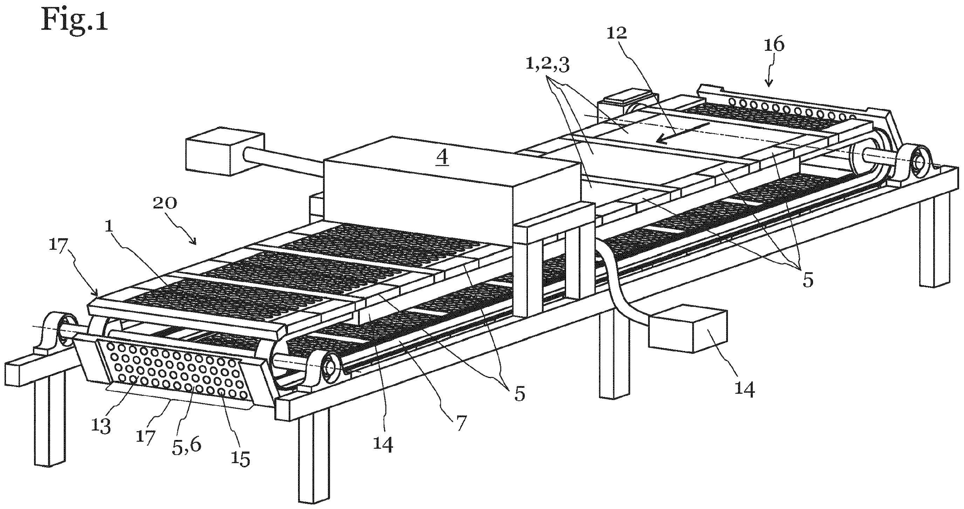

Fig. 1 zeigt eine Bearbeitungsstation in einer schematischen Schrägansicht. Diese umfasst eine Fördervorrichtung 7 zur kontinuierlichen oder intermittierenden Förderung mehrerer Haltevorrichtungen 5. Die Fördervorrichtung 7 ist in der vorliegenden Ausführungsform als Endlosförderer ausgebildet, entlang dessen Erstreckungsrichtung mehrere Haltevorrichtungen 5 aneinandergereiht angeordnet sind. Die Fördervorrichtung 7 umfasst eine obere Transportfläche und eine untere Transportfläche. Entlang der oberen Transportfläche ist in der vorliegenden Ausführungsform die Trennvorrichtung 4 vorgesehen. An den Haltevorrichtungen 5 ist entlang der Förderrichtung 12 vor der Trennvorrichtung 4 jeweils ein Backzusammenhang 3 angeordnet. Dieser Backzusammenhang 3 umfasst in allen Ausführungsformen mindestens einen Waffelformkörper 1 und einen den Waffelformkörper 1 umgebenden Steg, insbesondere mindestens einen Verbindungssteg 2, wobei bevorzugt, wie auch in dieser Ausführungsform, mehrere Waffelformkörper 1 durch die Verbindungsstege 2 zu einem Backzusammenhang 3 zusammengesetzt sind.

Durch die Trennvorrichtung 4 können die Verbindungsstege 2 von den Waffelformkörpern 1 abgetrennt werden. Die Haltevorrichtungen 5 wirken bevorzugt als Saugplatten. Hierzu ist eine Unterdruckquelle 14 vorgesehen, die in Saugöffnungen 15 der Haltevorrichtungen 5 münden, um den Backzusammenhang 3 bzw. die Verbindungsstege 2 und/oder die Waffelformkörper 1 mit einer Haltekraft zu halten. Entlang der Förderrichtung 12, nach der Trennvorrichtung 4, werden ausschließlich die Waffelformkörper 1 an den Haltevorrichtungen 5 gehalten. Die Verbindungsstege 2 wurden in diesem Bereich bereits von der Trennvorrichtung 4 abgetrennt und über eine nicht dargestellte Abführvorrichtung entfernt. Gemäß der vorliegenden Ausführungsform ist vorgesehen, dass die Haltevorrichtungen 5 von der Fördervorrichtung 7 nacheinander von einem Aufnahmebereich 16 zur Aufnahme der Backzusammenhänge 3 durch eine Trennvorrichtung 4 und weiter zu einem Entnahmebereich 20 zur Entnahme der Waffelformkörper 1 bewegt werden oder bewegbar sind.

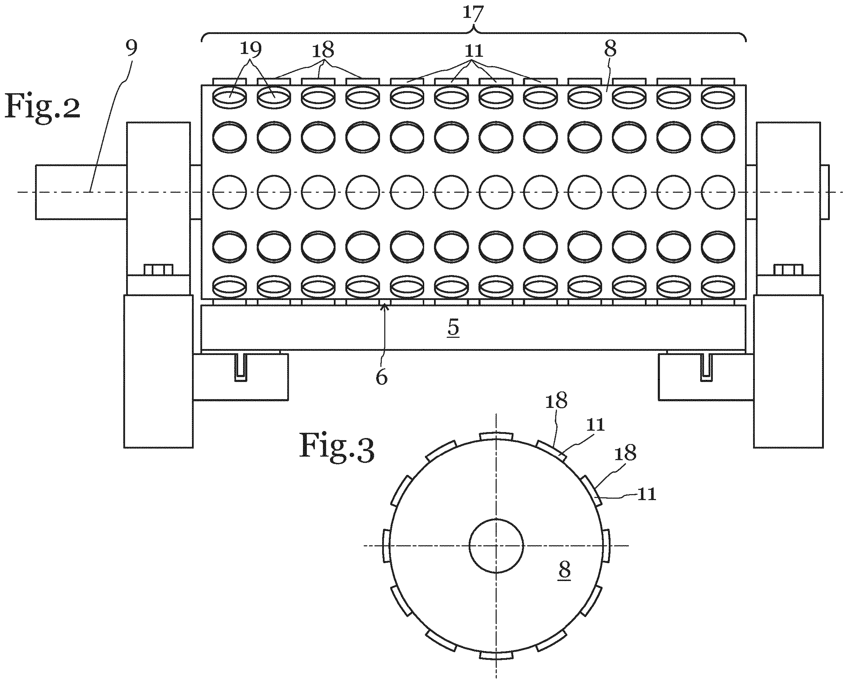

Fig. 2 zeigt eine schematische Ansicht einer möglichen Ausführungsform von Teilen der Bearbeitungsstation. Die Bearbeitungsstation umfasst eine Trennvorrichtung 4. Diese Trennvorrichtung 4 umfasst eine Schneidwalze, die einen Grundkörper 8 und mehrere Schneidwerkzeuge 11 umfasst. Der Grundkörper 8 ist in dieser Ausführungsform zylindrisch ausgeführt. Die Schneidwerkzeuge 11 ragen in radialer Richtung von dem Grundkörper 8 ab. Der Grundkörper 8, und dadurch auch die an diesem Grundkörper 8 vorgesehenen Schneidwerkzeuge 11, können um eine Rotationsachse 9 gedreht werden. Insbesondere geschieht die Rotation über einen nicht dargestellten Drehantrieb. Die Haltevorrichtung 5 wird zur Bearbeitung des Backzusammenhangs 3 derart bewegt, dass sie die Schneidwerkzeuge 11 an dem Waffelformkörper 1 bzw. an der Haltevorrichtung 5 abrollen. Zur Ermöglichung einer Abrollbewegung ist bevorzugt vorgesehen, dass die Rotation des Grundkörpers 8 bzw. der Schneidwerkzeuge 11 gegenüber der Bewegung der Haltevorrichtung 5 bzw. der Haltevorrichtungen 5 synchronisiert ist. Der Grundkörper 8 ist gegebenenfalls entlang seiner gesamten Breite 17 des an der Haltevorrichtung 5 angeordneten Haltebereichs 6 mit einem oder mehreren Schneidwerkzeugen 11 versehen. Der Haltebereich 6 ist insbesondere jener Bereich der Haltevorrichtung 5, in dem der Backzusammenhang 3 gehalten wird.

Die Haltevorrichtungen 5 sind bevorzugt entlang der Fördervorrichtung 7 geführt gelagert. Diese Lagerung der Haltevorrichtung 5 ist bevorzugt derart ausgebildet, dass die Haltevorrichtungen 5 als Gegenhalter bzw. als Gegenschneide zur Schnittbewegung der Schneidwerkzeuge 11 wirken. Insbesondere weisen die Haltevorrichtungen 5 im Bereich der Trennvorrichtung 4 keinen Freiheitsgrad entlang der Richtung der Schnittkräfte, insbesondere senkrecht zum Verlauf der Backzusammenhänge 3, auf. In der vorliegenden Ausführungsform umfassen die Schneidwerkzeuge 11 jeweils Schneiden 18. Die Schneiden 18 sind jene Elemente der Schneidwerkzeuge 11, die außen liegend angeordnet sind. Die Schneiden 18 verlaufen in der vorliegenden Ausführungsform entlang einer geschlossenen, hier entlang einer kreisförmigen, Kontur. Dadurch können die einzelnen Waffelformkörper 1 von den Verbindungsstegen 2 abgetrennt werden. Die Schneidwerkzeuge 11 bzw. die Schneiden 18 sind von Freistellungen 19 umgeben. Diese Freistellungen 19 sind beispielsweise im Inneren der geschlossenen Konturen der Schneiden 18 vorgesehen. Die Freistellungen 19 dienen insbesondere der Aufnahme jener Teile der Waffelformkörper 1, die sich von den Verbindungsstegen 2 Richtung Grundkörper 8 erstrecken.

Fig. 3 zeigt eine schematische Seitenansicht der Schneidwalze mit einem Grundkörper 8 und mehreren Schneidwerkzeugen 11. In der vorliegenden Ausführungsform ist der Grundkörper 8 zylindrisch ausgeführt. In allen Ausführungsformen kann der Grundkörper 8 jedoch jede beliebige Form aufweisen, die es ermöglicht, dass die Schneidwerkzeuge 11 ihre gewünschte Wirkung erzielen, insbesondere die Waffelformkörper 1 von den Verbindungsstegen 2 abtrennen und/oder eine abrollende Schneidbewegung durchführen. In der vorliegenden Ausführungsform sind die außen liegenden Schneiden 18 der Schneidwerkzeuge 11 derart ausgebildet, dass sie entlang einer koaxial zur Rotationsachse 9 angeordneten Zylinderkontur enden.

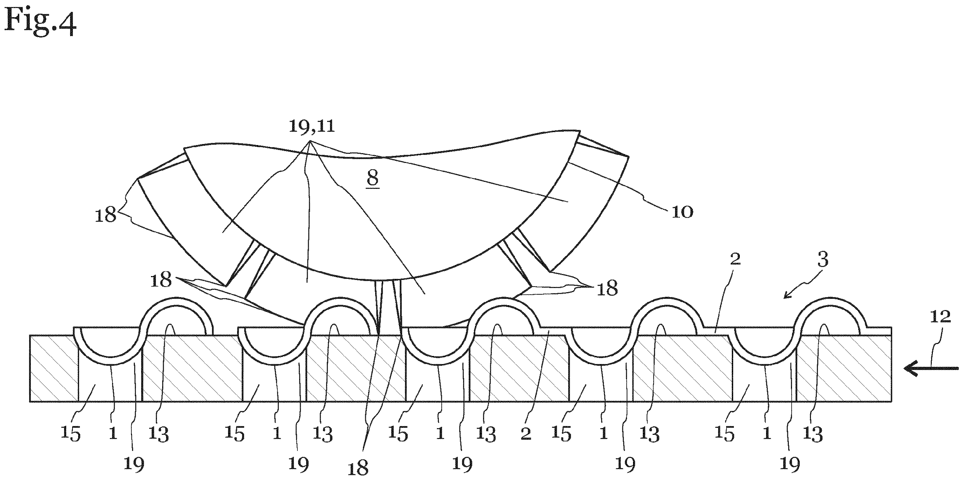

Fig. 4 zeigt eine Detailansicht von maßgeblichen Komponenten der Bearbeitungsstation in einer schematischen Darstellung. Am Grundkörper 8, der in der vorliegenden Darstellung nur teilweise abgebildet ist, sind mehrere Schneidwerkzeuge 11 vorgesehen. Diese Schneidwerkzeuge 11 bzw. deren Schneiden 18 verlaufen im Wesentlichen entlang einer zylindrischen Fläche, die konzentrisch zur Rotationsachse 9 des Grundkörpers 8 angeordnet ist. Im Bereich der Schneiden 18 sind Freistellungen 19 vorgesehen. Diese Freistellungen 19 dienen der Aufnahme von Teilen der Waffelformkörper 1, die sich von den Verbindungsstegen 2 Richtung Grundkörper 8 erstrecken. In der vorliegenden Ausführungsform stehen Teile der Waffelformkörper 1 beidseitig von den Verbindungsstegen 2 ab. Ein Teil ragt in eine Freistellung 19 der Haltevorrichtung 5. Der andere abstehende Teil ragt während des Trennvorgangs in die gegenüberliegende Richtung in die Freistellung 19 des Schneidwerkzeugs 11. Bevorzugt ist eine Haltefläche 13 vorgesehen, an der der Verbindungssteg 2 und/oder der Waffelformkörper 1 anliegt.

In der vorliegenden Ausführungsform sind Saugöffnungen 15 vorgesehen. Die Saugöffnungen 15 dienen der Halterung der Waffelformkörper 1 durch eine Unterdruckkraft. Die Schneidwerkzeuge 11 sind bevorzugt mit der Bewegung der Haltevorrichtung 5 synchronisiert, sodass zwischen den Schneidwerkzeugen 11 und den Haltevorrichtungen 5 bevorzugt kein Schlupf auftritt. Insbesondere ist die Umfangsgeschwindigkeit der Schneiden 18 gleich der Bewegungsgeschwindigkeit des Backzusammenhangs 3 bzw. der Haltevorrichtungen 5.

## Patentansprüche

1. Bearbeitungsstation zur Bildung von Waffelformkörpern (1) durch Abtrennen von Verbindungsstegen (2) von einem aus den Waffelformkörpern (1) und den Verbindungsstegen (2) zusammengesetzten Backzusammenhang (3), umfassend:
- eine Trennvorrichtung (4) zum Abtrennen der Verbindungsstege (2) des Backzusammenhangs (3),
- mindestens eine Haltevorrichtung (5) zur Halterung des Backzusammenhangs (3) und der Waffelformkörper (1) des Backzusammenhangs (3) in einem Haltebereich (6) der Haltevorrichtung (5),
- und eine Fördervorrichtung (7), die zur kontinuierlichen Förderung der Haltevorrichtung (5) durch die Trennvorrichtung (4) entlang einer Förderrichtung (12) eingerichtet ist,
- wobei die Trennvorrichtung (4) einen insbesondere zylindrisch ausgebildeten Grundkörper (8) aufweist, der um eine oder seine Rotationsachse (9) drehbar angetrieben ist,
- wobei der Grundkörper (8) an seiner Außenseite oder an seiner Mantelfläche (10) mit mindestens einem Schneidwerkzeug (11) zum Abtrennen mindestens eines Verbindungsstegs (2) versehen ist,
**dadurch gekennzeichnet,**
- **dass** der drehbar angetriebene Grundkörper (8) mit dem mindestens einen Schneidwerkzeug (11) als Schneidwalze zur Trennung der Verbindungsstege (2) von den Waffelformkörpern (1) ausgebildet ist oder wirkt,
- und **dass** die Bewegung der Fördervorrichtung (7) mit der Rotation des Grundkörpers (8) und des Schneidwerkzeugs (11) synchronisiert ist.

2. Bearbeitungsstation nach Anspruch 1, **dadurch gekennzeichnet,**
- **dass** die Haltevorrichtung (5) als Gegenhalter für die Schneidwalze ausgebildet ist oder wirkt,
- und insbesondere dass das Schneidwerkzeug (11) zum Abtrennen der Verbindungsstege (2) an der Haltevorrichtung (5) abrollt.

3. Bearbeitungsstation nach einem der Ansprüche 1 oder 2, **dadurch gekennzeichnet, dass** die Haltevorrichtung (5) eine oder mehrere der Form des Backzusammenhangs (3) angepasste Freistellungen (19) oder Vertiefungen zur Aufnahme der vom Backzusammenhang (3) Richtung Haltevorrichtung (5) abstehenden Backprodukte aufweist.

4. Bearbeitungsstation nach Anspruch 3, **dadurch gekennzeichnet, dass** die Haltevorrichtung (5) im Bereich der Freistellungen (19) oder Vertiefungen eine oder mehrere der Form des Backzusammenhangs (3) angepasste Halteflächen (13) zur Anlage der Waffelformkörper (1) oder zur Anlage der Verbindungsstege (2) des Backzusammenhangs (3) umfasst.

5. Bearbeitungsstation nach einem der Ansprüche 3 oder 4, **dadurch gekennzeichnet, dass** mit einer Unterdruckquelle (14) in Kontakt stehende Saugöffnungen (15) zur Halterung der Waffelformkörper (1) des Backzusammenhangs (3) an der Haltevorrichtung (5) und zur Halterung der Backprodukte in den Freistellungen (19) oder Vertiefungen vorgesehen sind.

6. Bearbeitungsstation nach einem der Ansprüche 1 bis 5, **dadurch gekennzeichnet, dass** die Haltevorrichtung (5) als Saugplatte ausgebildet ist.

7. Bearbeitungsstation nach einem der Ansprüche 1 bis 6, **dadurch gekennzeichnet,**
- **dass** das mindestens eine Schneidwerkzeug (11) den Grundkörper (8) in radialer Richtung überragt,
- und **dass** der Grundkörper (8) und/oder das Schneidwerkzeug (11) mindestens eine, bevorzugt mehrere, der Form des Backzusammenhangs (3) angepasste Freistellungen (19) oder Vertiefungen zur Aufnahme der vom Backzusammenhang (3) Richtung Grundkörper (8) abstehenden Backprodukte aufweist.

8. Bearbeitungsstation nach einem der Ansprüche 1 bis 7, **dadurch gekennzeichnet, dass** an dem Grundkörper (8) mehrere Schneidwerkzeuge (11) vorgesehen sind.

9. Bearbeitungsstation nach einem der Ansprüche 1 bis 8, **dadurch gekennzeichnet, dass** der Grundkörper (8) im Wesentlichen entlang der gesamten Breite (17) des Haltebereichs (6) mit einem Schneidwerkzeug (11) oder mit mehreren Schneidwerkzeugen (11) versehen ist.

10. Bearbeitungsstation nach einem der Ansprüche 1 bis 9, **dadurch gekennzeichnet, dass** die Schneidwerkzeuge (11) und/oder deren Schneiden (18) im Wesentlichen entlang einer zylindrischen Fläche verlaufen oder abschließen, wobei die zylindrische Fläche koaxial zur Rotationsachse (9) des Grundkörpers (8) angeordnet ist.

11. Bearbeitungsstation nach einem der Ansprüche 1 bis 10, **dadurch gekennzeichnet,**
- **dass** die Schneidwerkzeuge (11) und/oder deren Schneiden (18) im Wesentlichen entlang einer zylindrischen Fläche verlaufen oder abschließen, wobei die zylindrische Fläche koaxial zur Rotationsachse (9) des Grundkörpers (8) angeordnet ist,
- und **dass** die Haltevorrichtung (5) im Wesentlichen tangential zu dieser zylindrischen Fläche verläuft.

12. Bearbeitungsstation nach einem der Ansprüche 1 bis 11, **dadurch gekennzeichnet, dass** die Schneidwerkzeuge (11) mit der Bewegung der Haltevorrichtung (5) derart synchronisiert sind, dass zwischen den Schneidwerkzeugen (11) und den Haltevorrichtungen (5) kein Schlupf auftritt und insbesondere, dass die Umfangsgeschwindigkeit der Schneiden (18) der Bewegungsgeschwindigkeit des Backzusammenhangs (3) bzw. der Haltevorrichtungen (5) entspricht.

13. Bearbeitungsstation nach einem der Ansprüche 1 bis 12, **dadurch gekennzeichnet, dass** mehrere Schneidwerkzeuge (11) entlang ihrer zylindrischen Bewegungsfläche am Grundkörper (8) hintereinander und/oder versetzt hintereinander angeordnet sind.

14. Bearbeitungsstation nach einem der Ansprüche 1 bis 13, **dadurch gekennzeichnet,**
- **dass** mehrere Haltevorrichtungen (5) vorgesehen sind,
- **dass** die Fördervorrichtung (7) als Endlosförderer ausgebildet ist,
- **dass** die Haltevorrichtungen (5) aneinandergereiht entlang der Fördervorrichtung (7) angeordnet sind,
- und **dass** die Haltevorrichtungen (5) von der Fördervorrichtung (7) kontinuierlich durch die Trennvorrichtung (4) bewegt werden oder bewegbar sind,
- wobei die Haltevorrichtungen (5) von der Fördervorrichtung (7) nacheinander, insbesondere von einem Aufnahmebereich (16) zur Aufnahme der Backzusammenhänge (3), durch die Trennvorrichtung (4) und zu einem Entnahmebereich (20) zur Entnahme der Waffelformkörper (1) bewegt werden oder bewegbar sind.

15. Bearbeitungsstation nach einem der Ansprüche 1 bis 14, **dadurch gekennzeichnet, dass** die Rotationsachse (9) quer zur Förderrichtung (12) und insbesondere normal zur Förderrichtung (12) angeordnet ist.

16. **Anordnung** eines aus Waffelformkörpern (1) und Verbindungsstegen (2) zusammengesetzten **Backzusammenhangs** (3) und einer **Bearbeitungsstation** nach einem der vorangegangenen Ansprüche, wobei die Waffelformkörper (1) beidseitig von den Verbindungsstegen (2) abstehen und/oder wobei die Waffelformkörper (1) von den Verbindungsstegen (2) Richtung Schneidwerkzeug (11) abstehen.
